# DEMANDE DE BREVET EUROPEEN

(11) **EP 3 124 408 A1**
(43) Date de publication de la demande: **01.02.2017**
(21) Numéro de dépôt: 16181800.0
(22) Date de dépôt: 28.07.2016
(51) Int. Cl.: B65G 47/68, B07C 5/06, B65G 47/64

(54) **INSTALLATION D'APPROVISIONNEMENT EN PIECES D'UN POSTE DE TRAVAIL**

(30) Priorité: 31.07.2015 FR 1557418
(71) Demandeur: Supratec, 91070 Bondoufle (FR)
(72) Inventeur: ROMANO, Pascal, 54800 JARNY (FR)
(74) Mandataire: Decorchemont, Audrey Véronique Christèle

(57) **Abrégé**

L'invention concerne une installation d'approvisionnement en pièces d'un poste de travail, l'installation comportant un tapis d'amenée (2), un tapis de saisie (4), un tapis transversal (8) agencé entre le tapis d'amenée et le tapis de saisie, des moyens de séparation des pièces en vrac en provenance du tapis transversal pour alimenter le tapis de saisie en pièces séparées, un dispositif de détection (15) de la position et/ou de l'orientation des pièces sur le tapis de saisie et un robot d'approvisionnement (16) du poste de travail afin d'évacuer les pièces du tapis de saisie à destination du poste de travail.

## Description

L'invention concerne également une installation d'approvisionnement en pièces d'un poste de travail.

### ARRIERE-PLAN TECHNOLOGIQUE DE L'INVENTION

Dans les lignes de production, un poste de travail peut être approvisionné de façon automatique par une ou plusieurs installations d'approvisionnement.

Les installations d'approvisionnement actuelles sont toutefois généralement dédiées à un chargement spécifique correspondant à un seul type de pièces et à seul type de conditionnement desdites pièces (pièces en vrac ou agencées dans des boîtes). Dès lors, il s'avère difficile de modifier le chargement en entrée de ces installations d'approvisionnement.

### OBJET DE L'INVENTION

Un but de l'invention est de proposer une installation d'approvisionnement en pièces d'un poste de travail qui soit plus aisément adaptable à un nouveau chargement.

### BREVE DESCRIPTION DE L'INVENTION

A cet effet, l'invention a pour objet une installation d'approvisionnement en pièces d'un poste de travail, l'installation comportant :
- un tapis d'amenée des pièces en vrac ou de boîtes contenant les pièces,
- des moyens d'entraînement du tapis d'amenée aptes à entraîner le tapis d'amenée dans un sens d'avance selon un mouvement saccadé,
- un tapis de saisie, le tapis de saisie étant agencé de sorte à être mobile entre une position horizontale de travail et une position inclinée d'évacuation des pièces ou des boîtes hors de l'installation et du poste de travail,
- un tapis transversal agencé entre le tapis d'amenée et le tapis de saisie, l'installation étant agencée de façon que le tapis transversal transporte uniquement les pièces en vrac tout en autorisant le passage des boîtes entre le tapis d'amenée et le tapis de saisie,
- des moyens de séparation des pièces en vrac en provenance du tapis transversal pour alimenter le tapis de saisie en pièces séparées, lesdits moyens de séparation comprenant une trémie débouchant au-dessus du tapis de saisie et un organe d'alimentation s'étendant entre le tapis transversal et la trémie,
- un dispositif de détection de la position et/ou de l'orientation des pièces sur le tapis de saisie ou dans la boîte présente sur le tapis de saisie, le dispositif de détection étant relié à une unité de commande,
- un robot d'approvisionnement du poste de travail commandé par l'unité de commande à partir d'informations transmises par le dispositif de détection afin d'évacuer les pièces du tapis de saisie à destination du poste de travail.

Ainsi, l'invention peut aussi bien fonctionner avec un chargement du tapis d'amenée sous forme de pièces en vrac que sous forme de boîtes comprenant les pièces.

Dans le cas d'un chargement sous forme de pièces en vrac, les pièces en vrac circulent d'abord sur le tapis d'amenée puis sur le tapis transversal avant d'arriver dans l'organe d'alimentation par lequel elles sont transportées jusqu'à la trémie. Les pièces retombent alors de façon séparée sur le tapis de saisie ce qui facilite leur préhension par le robot d'approvisionnement.

Dans le cas d'un chargement sous forme de boîtes comprenant les pièces en vrac, les boîtes circulent d'abord sur le tapis d'amenée puis sur le tapis de saisie sans passer par le tapis transversal et les moyens de séparation, les pièces étant alors prélevées directement à l'intérieur des boîtes présentes sur le tapis de saisie par le robot d'approvisionnement.

En outre, l'invention s'adapte rapidement à un changement de type de pièces quel que soit leur conditionnement : il suffit en effet d'incliner le tapis de saisie pour permettre l'évacuation rapide des boîtes et/ou des pièces de l'ancien chargement hors de l'installation tout en commençant simultanément à agencer sur le tapis d'amenée le nouveau chargement. Il n'y a donc pas d'arrêt total de l'invention lors d'un changement de chargement.

Selon un mode de réalisation particulier, le tapis d'amenée et les moyens d'entraînement du tapis d'amenée sont configurés de sorte à pouvoir entraîner le tapis d'amenée dans les deux sens de marche.

Selon un mode de réalisation particulier, un tapis intermédiaire est agencé entre le tapis d'amenée et le tapis de saisie dans le prolongement du tapis d'amenée et du tapis de saisie, le tapis transversal étant alors agencé entre le tapis intermédiaire et le tapis de saisie.

Selon un mode de réalisation particulier, l'installation comporte des moyens d'entraînement du tapis intermédiaire, le tapis intermédiaire et les moyens d'entraînement du tapis intermédiaire étant configurés de sorte à être aptes à entraîner le tapis intermédiaire à une vitesse supérieure à la vitesse à laquelle est entraîné le tapis d'amenée.

Selon un mode de réalisation particulier, l'installation comporte des moyens d'entraînement du tapis de saisie, le tapis de saisie et les moyens d'entraînement du tapis de saisie étant configurés de sorte à pouvoir entraîner le tapis de saisie dans les deux sens de marche.

Selon un mode de réalisation particulier, l'organe d'alimentation comporte un tapis incliné agencé pour remonter les pièces du tapis transversal à la trémie.

Selon un mode de réalisation particulier, le tapis incliné est cranté.

Selon un mode de réalisation particulier, l'organe d'alimentation est configuré pour remonter une par une les pièces du tapis transversal à la trémie.

Selon un mode de réalisation particulier, un tapis de retour est agencé de sorte à s'étendre parallèlement au tapis d'amenée et au tapis de saisie et sous le tapis d'amenée, le tapis de saisie et le tapis transversal.

Selon un mode de réalisation particulier, le tapis de retour s'étend de sorte à avoir une première extrémité débouchant au niveau d'une extrémité d'entrée du tapis d'amenée et une deuxième extrémité débouchant au niveau d'une des extrémités du tapis de saisie.

Selon un mode de réalisation particulier, le tapis de retour s'étend de sorte qu'une de ses extrémités soit agencée au niveau de l'extrémité du tapis de saisie qui est à l'aplomb du tapis transversal.

Selon un mode de réalisation particulier, le dispositif de détection comporte des moyens de détection optique et des moyens d'éclairage associés aux moyens de détection optique pour éclairer le tapis de saisie et améliorer la qualité des informations acquises par les moyens de détection optique.

Bien entendu, pour la présente demande, le terme de « boîte » désigne tout type de contenant permettant de contenir des pièces et d'en autoriser la préhension par le robot d'approvisionnement tel qu'une caisse, un emballage, un blister ...

De la même façon, le terme de « trémie » désigne tout organe comprenant une goulotte permettant d'assurer le déplacement de la pièce entre l'organe d'alimentation et le tapis de saisie.

En outre les termes « inférieur », « sous » ... sont à entendre dans la présente demande en référence à la position en service de l'installation.

D'autres caractéristiques et avantages de l'invention ressortiront de la description donnée ci-après d'un mode de réalisation particulier de l'invention.

### BREVE DESCRIPTION DES DESSINS

Il sera fait référence aux dessins annexés parmi lesquels :
- la figure 1 est une vue en perspective de l'installation d'approvisionnement en pièces d'un poste de travail selon un mode de réalisation particulier de l'invention,
- la figure 2 est un schéma illustrant un premier mode de fonctionnement de l'installation illustrée à la figure 1 lorsque des boîtes sont chargées à l'entrée de l'installation,
- la figure 3 est un schéma illustrant un deuxième mode de fonctionnement de l'installation illustrée à la figure 1 lorsque des pièces en vrac sont chargées à l'entrée de l'installation,
- les figures 4a, 4b et 4c sont des schémas illustrant les différentes étapes d'un troisième mode de fonctionnement de l'installation illustrée à la figure lors d'un changement de chargement de l'installation.

### DESCRIPTION DETAILLEE DE L'INVENTION

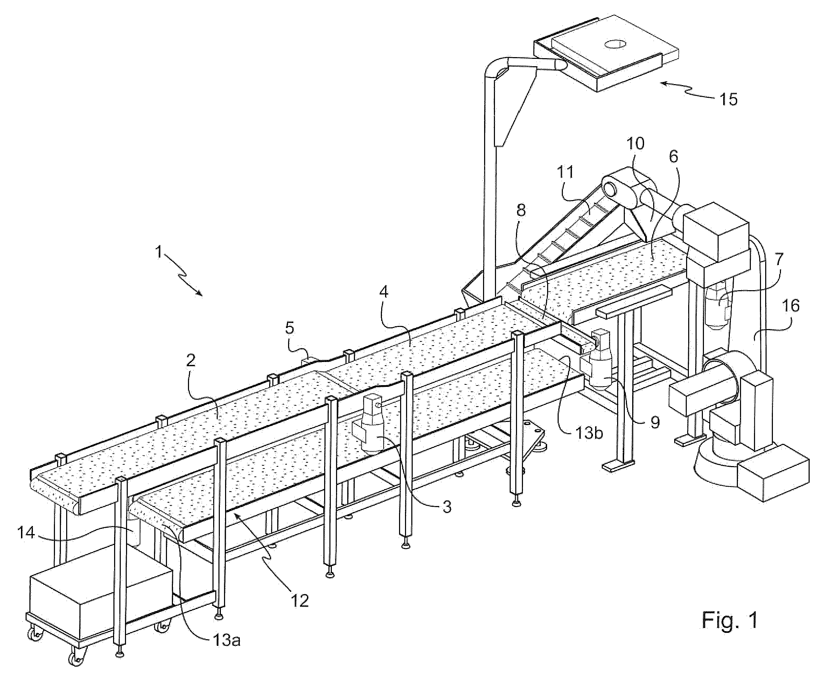

L'installation d'approvisionnement en pièces selon un mode de réalisation particulier de l'invention est généralement référencée en 1 à la figure 1. Ladite installation 1 est ici destinée à approvisionner un poste de travail (non représenté ici) tel qu'un poste d'emmanchement.

L'installation 1 comporte un tapis d'amenée 2 des pièces en vrac ou de boîtes contenant les pièces.

L'installation 1 comporte en outre des moyens d'entraînement 3 du tapis d'amenée. Le tapis d'amenée 2 et les moyens d'entraînement du tapis d'amenée 3 sont ici configurés de sorte à être aptes à entraîner le tapis d'amenée 2 par saccades (succession d'avance et d'arrêt brusque). Ceci permet de faciliter le transport des pièces en vrac dans l'installation 1 comme nous le verrons par la suite. De préférence, le tapis d'amenée 2 et les moyens d'entraînement 3 du tapis d'amenée 2 sont configurés de sorte à pouvoir entraîner le tapis d'amenée 2 dans les deux sens de marche (sens d'avance et sens arrière). Ceci permet de faciliter le changement de chargement transporté par l'installation 1 comme nous le verrons par la suite.

Selon un mode de réalisation particulier, l'installation 1 comporte un tapis intermédiaire 4 qui est agencé à la suite du tapis d'amenée 2 et dans le prolongement du tapis d'amenée 2.

L'installation comporte en outre des moyens d'entraînement 5 du tapis intermédiaire 4 dans le sens d'avance. De préférence, le tapis intermédiaire 4 et les moyens d'entraînement 5 du tapis intermédiaire 4 sont configurés de sorte à être aptes à entraîner le tapis intermédiaire 4 à une vitesse supérieure à la vitesse à laquelle est entraîné le tapis d'amenée 2. Ceci permet de favoriser le transport des différentes pièces ou boîtes dans l'installation 1.

Par ailleurs, l'installation 1 comporte un tapis de saisie 6 agencé dans le prolongement du tapis d'amenée 2 et du tapis intermédiaire 4 avec un décalage relativement au tapis intermédiaire 4. Le tapis de saisie 6 est agencé dans l'installation 1 de sorte à être mobile entre une position horizontale de travail et une position inclinée d'évacuation des pièces ou des boîtes hors de l'installation 1. En outre, l'installation 1 comporte des moyens d'actionnement (non visibles ici) associés au tapis de saisie 6 pour permettre le passage automatique du tapis de saisie 6 entre ces deux positions.

L'installation 1 comprend en outre des moyens d'entraînement 7 du tapis de saisie 6. De préférence, le tapis de saisie 6 et les moyens d'entraînement 7 du tapis de saisie 6 sont configurés de sorte à pouvoir entraîner le tapis de saisie 6 dans les deux sens de marche.

En outre, l'installation 1 comporte un tapis transversal 8 agencé entre le tapis intermédiaire 4 et le tapis de saisie 6 (et donc entre le tapis d'amenée 2 et le tapis de saisie 6, le tapis d'amenée 2 se trouvant en amont du tapis intermédiaire 4). L'installation 1 comporte bien entendu des moyens d'entraînement 9 du tapis transversal 8.

L'installation 1 est par ailleurs conformée de façon que le tapis transversal 8 ne puisse transporter que les pièces en vrac tout en autorisant un passage direct des boîtes du tapis intermédiaire 4 au tapis de saisie 6. A cet effet, le tapis transversal 8 est ici agencé entre le tapis intermédiaire 4 et le tapis de saisie 6 au niveau du décalage entre le tapis intermédiaire 4 et le tapis de saisie 6. Le tapis transversal 8 s'étend donc transversalement au tapis intermédiaire 4 et au tapis de saisie 6 et à un niveau inférieur au tapis intermédiaire 4 et au tapis de saisie 6. Le tapis transversal 8 est ainsi conformé pour présenter une largeur telle qu'elle soit suffisante pour que le tapis transversal 8 puisse transporter les pièces mais insuffisante pour que le tapis transversal 8 puisse déplacer les boîtes. Par ailleurs le tapis intermédiaire 4 et le tapis de saisie 6 sont agencés de sorte à laisser entre eux un décalage suffisant pour que les pièces en vrac puissent tomber du tapis intermédiaire 4 sur le tapis transversal 8 mais insuffisant pour que les boîtes puissent également tomber du tapis intermédiaire 4 sur le tapis transversal 8. Au contraire, le décalage entre le tapis intermédiaire 4 et le tapis de saisie 6 est suffisamment faible pour ne pas gêner le déplacement d'une boîte directement du tapis intermédiaire 4 au tapis de saisie 6.

De plus, l'installation 1 comprend des moyens de séparation des pièces en vrac en provenance du tapis transversal 8. Lesdits moyens comprennent ainsi une trémie 10 débouchant au-dessus du tapis de saisie 6 et un organe d'alimentation 11 s'étendant entre le tapis transversal 8 et la trémie 10. Selon un mode de réalisation particulier, lesdits moyens sont agencés de sorte que la trémie 10 débouche au-dessus de l'extrémité du tapis de saisie 6 opposée à l'extrémité agencée en regard du tapis intermédiaire 4. De façon particulière, l'organe d'alimentation 11 comporte un tapis incliné agencé pour remonter les pièces du tapis transversal à la trémie. De préférence, l'organe d'alimentation 11 est configuré pour remonter une par une les pièces du tapis transversal 8 à la trémie 10. A cet effet, ici le tapis incliné est cranté.

Selon un mode de réalisation préféré, l'installation 1 comporte un tapis de retour 12 agencé de sorte à s'étendre parallèlement au tapis d'amenée 2, au tapis intermédiaire 4 et au tapis de saisie 6 et sous le tapis d'amenée 2, le tapis intermédiaire 4, le tapis de saisie 6 et le tapis transversal 8. Le tapis de retour 12 s'étend ici de sorte à avoir une première extrémité 13a débouchant au niveau de l'extrémité du tapis d'amenée 2 sur laquelle sont disposées les pièces et les boîtes par un opérateur et une deuxième extrémité 13b débouchant au niveau d'une des extrémités du tapis de saisie 6. Ici, le tapis de retour 12 s'étend de sorte que sa deuxième extrémité 13b soit agencée au niveau de l'extrémité du tapis de saisie 6 qui est en regard du tapis intermédiaire 4. Le tapis de saisie 6 est alors agencé dans l'installation 1 de sorte qu'en position inclinée, il s'étende en direction de la deuxième extrémité 13b du tapis de retour 12.

Ceci permet de ramener les boîtes et/ou les pièces non utilisées au niveau de l'entrée de l'installation 1 permettant ainsi d'éviter à l'opérateur de se déplacer pour récupérer lesdites boîtes ou lesdites pièces. L'installation 1 comporte en outre des moyens d'entraînement 14 du tapis de retour 12.

L'installation 1 comporte également une unité de commande (non représentée ici) qui permet notamment de gérer les différents moyens d'entraînement 3, 5, 7, 9, 14 des tapis de l'installation et également de gérer les moyens d'actionnement du tapis de saisie 6. Comme il sera vu par la suite, l'unité de commande est configurée pour commander au moins trois modes de fonctionnement de l'installation 1 : un premier mode pour la production à partir de pièces déposées en vrac sur le tapis d'amenée 2, un deuxième mode pour la production à partir de boîtes contenant les pièces et déposées sur le tapis d'amenée 2 et un troisième mode pour le changement de chargement.

En outre, l'installation 1 comporte un dispositif de détection 15 de la position et/ou de l'orientation des pièces sur le tapis de saisie 6 ou dans la boîte présente sur le tapis de saisie 6, le dispositif de détection 15 étant relié à l'unité de commande. Le dispositif de détection 15 est ici agencé au niveau du tapis de saisie 6. Le dispositif de détection 15 comporte par exemple des moyens de détection optique tels qu'une caméra. De préférence, le dispositif de détection 15 comporte en outre des moyens d'éclairage associés aux moyens de détection optique pour éclairer le tapis de saisie 6 et améliorer la qualité des informations acquises par les moyens de détection optique tels que les images prises par la caméra. Ceci facilite le travail de détection de la position et/ou de l'orientation des pièces sur le tapis de saisie 6.

Par ailleurs, l'installation 1 comprend un robot d'approvisionnement 16 du poste de travail. Ledit robot d'approvisionnement 16 est ici agencé au-dessus du tapis de saisie 6. Le robot d'approvisionnement 16 est commandé par l'unité de commande à partir d'informations transmises par le dispositif de détection 15 afin d'évacuer les pièces du tapis de saisie 6 à destination du poste de travail. De la sorte, le robot d'approvisionnement 16 peut plus aisément saisir les pièces présentes sur le tapis de saisie 6. Le robot d'approvisionnement 16 est de préférence un robot à six axes ce qui permet à l'installation 1 d'être associée à tout type de poste de travail. De façon particulière, le robot d'approvisionnement 16 est équipé d'un système de changement d'outil. Ceci permet un changement automatique d'outil du robot d'approvisionnement 16 lorsqu'un produit différent est chargé dans l'installation.

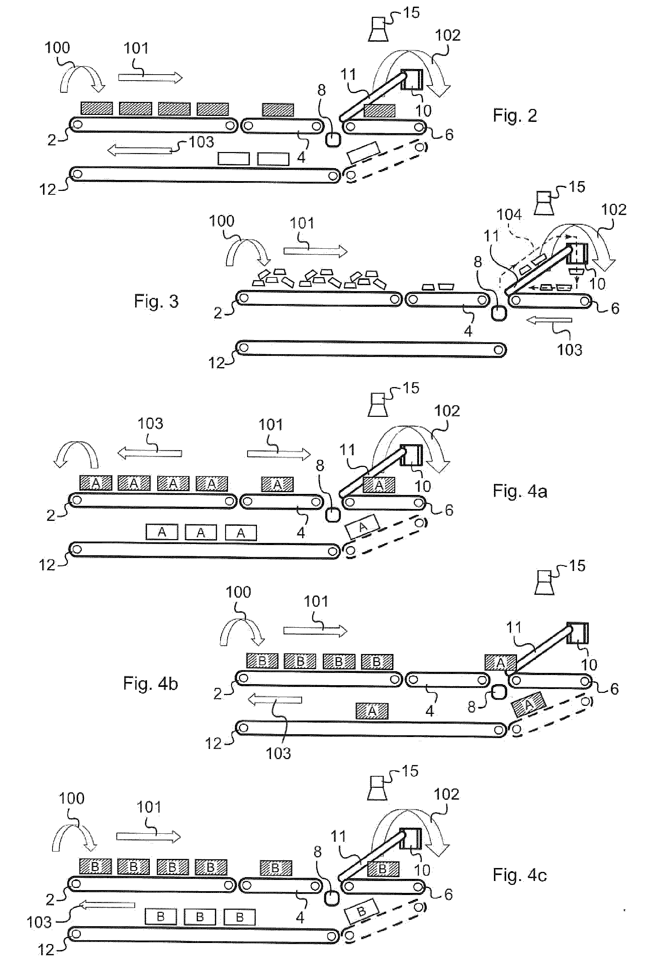

En référence à la figure 2, la mise en oeuvre de l'installation 1 lorsque des boîtes remplies de pièces sont chargées sur le tapis d'amenée 2 va être à présente décrite.

Tout d'abord, l'opérateur dépose les boîtes sur le tapis d'amenée 2 (comme indiqué par la flèche 100). Le tapis d'amenée 2 est actionné selon le sens d'avance 101 (c'est-à-dire en direction du robot d'approvisionnement). Le tapis d'amenée 2 est en outre entraîné par les moyens d'entraînement correspondants afin d'avancer au fur et à mesure que de l'espace devient disponible sur le tapis d'amenée 2. Ceci permet à l'opérateur d'accumuler les boîtes sur le tapis d'amenée 2 jusqu'à saturation du tapis d'amenée 2. On optimise ainsi le chargement de l'installation 1.

Puis le tapis d'amenée 2 et le tapis intermédiaire 4 sont déplacés tous deux dans le sens d'avance de sorte à coopérer pour qu'une seule boîte à la fois soit déposée sur le tapis intermédiaire 4. Le tapis d'amenée 2 n'a toutefois pas nécessairement besoin d'être actionné par saccades dans le cas présent du fait de la présence des boîtes.

La récupération d'une boîte par le tapis intermédiaire 4 permet au tapis d'amenée 2 d'être déplacé : de l'espace est ainsi disponible à l'entrée du tapis d'amenée 2 ce qui permet qu'une nouvelle boîte puisse être agencée sur ce tapis d'amenée 2. On optimise encore davantage le chargement de l'installation. De préférence, l'installation 1 est configurée de sorte qu'il y ait toujours une boîte présente sur le tapis intermédiaire 4 pour optimiser le chargement de l'installation 1.

Lors d'une demande en approvisionnement du poste de travail, le tapis de saisie 6 et le tapis intermédiaire 4 sont actionnés selon le sens d'avance de sorte que la boîte présente sur le tapis intermédiaire 4 soit déposée sur le tapis de saisie 6. Le tapis de saisie 6 déplace alors la boîte jusque sous le champ de la caméra du dispositif de détection 15 avant de s'arrêter. A l'aide des informations fournies par le dispositif de détection 15 de la position et/ou de l'orientation de la ou des pièces présentes dans la boîte, l'unité de commande contrôle le robot d'approvisionnement 16 pour que celui-ci vienne saisir les pièces et les amener jusqu'au poste de travail (comme symbolisé par la flèche 102).

De préférence, sitôt que la boîte est passée sur le tapis de saisie 6, le tapis d'amenée 2 et le tapis intermédiaire 4 sont ensuite déplacés tous deux dans le sens d'avance de sorte à coopérer pour qu'une nouvelle boîte soit déposée sur le tapis intermédiaire 4. L'opérateur peut alors charger une nouvelle boîte à l'entrée du tapis d'amenée 2.

Une fois la boîte présente sur le tapis de saisie 6 vidée par le robot d'approvisionnement, le tapis de saisie 6 est déplacé dans le sens inverse 103 au sens d'avance (soit en direction opposée du robot d'approvisionnement 16) et est en outre incliné en direction du tapis de retour 12. Ceci permet d'évacuer de façon automatique la boîte du tapis de saisie 6.

Le tapis de retour 12 est actionné selon le sens inverse pour retourner les boîtes à l'opérateur. De préférence, l'installation 1 est configurée de sorte à alimenter le tapis de retour 12 dès lors que le tapis de saisie 6 est dans sa position inclinée. Le tapis de retour 12 est ainsi actionné de façon automatique afin d'avancer à chaque nouvelle inclinaison du tapis de saisie 6 pour le dépôt d'une nouvelle boîte.

Le tapis de saisie 6 est ensuite rebasculé en position horizontale ce qui lui permet de récupérer une nouvelle boîte à partir du tapis intermédiaire 4.

De la sorte, l'installation 1 permet un déplacement rapide et efficace des boîtes sur le tapis de saisie 6 et également un retour rapide des boîtes vides sans que cela ne nécessite l'intervention d'un opérateur au niveau du tapis de saisie 6. L'installation 1 permet en outre d'optimiser le chargement de l'installation 1.

En référence à la figure 3, la mise en oeuvre de l'installation 1 lorsque des pièces en vrac sont chargées sur le tapis d'amenée 2 va être à présente décrite.

Tout d'abord, l'opérateur dépose les pièces en vrac sur le tapis d'amenée 2 comme indiqué par la flèche 100. Le tapis d'amenée 2 est actionné selon le sens d'avance 101. Le tapis d'amenée 2 est en outre entraîné par les moyens d'entraînement correspondants par à-coups afin d'avancer au fur et à mesure que de l'espace devient disponible à l'entrée du tapis d'amenée où l'opérateur dépose les pièces en vrac. Ceci permet à l'opérateur d'accumuler les pièces sur le tapis d'amenée 2 jusqu'à saturation du tapis d'amenée 2. On optimise ainsi le chargement de l'installation 1.

Puis le tapis d'amenée 2 et le tapis intermédiaire 4 sont déplacés tous deux dans le sens d'avance 101 de sorte à coopérer pour que seulement une petite quantité de pièces en vrac ne soit déposée sur le tapis intermédiaire 4. A cet effet, le tapis d'amenée 2 est déplacé par mouvements saccadés, les mouvements saccadés du tapis d'amenée 2 facilitant le transport des pièces sur le tapis intermédiaire 4.

La récupération de pièces par le tapis intermédiaire 4 permet au tapis d'amenée 2 d'être déplacé : de l'espace est ainsi disponible à l'entrée du tapis d'amenée 2 ce qui permet que de nouvelles pièces puissent être agencées sur ce tapis d'amenée 2. On optimise encore davantage de chargement de l'installation 1. De préférence, l'installation 1 est configurée de sorte qu'il y ait toujours des pièces présentes sur le tapis intermédiaire 4 pour optimiser le chargement de l'installation 1.

Ensuite le tapis intermédiaire 4 déplace les pièces selon le sens d'avance ce qui finit par provoquer le basculement des pièces sur le tapis transversal 8. Le tapis transversal 8 déplace alors à son tour les pièces jusqu'à l'organe d'alimentation 11 qui remonte les pièces une à une jusqu'à la trémie 10. La trémie 10 permet alors le dépôt des pièces séparées les unes des autres sur le tapis de saisie 6.

Le tapis de saisie 6 est alors actionné selon le sens inverse 103 afin de déplacer les pièces sous le champ de la caméra du dispositif de détection 15. A l'aide des informations fournies par le dispositif de détection 15, l'unité de commande contrôle le robot d'approvisionnement 16 pour que celui-ci vienne saisir les pièces ayant une position et/ou une orientation spécifique prédéterminée sur le tapis de saisie et les amener jusqu'au poste de travail comme indiqué par la flèche 102.

Le déplacement en continu du tapis de saisie 6 dans le sens inverse 103 fait que les autres pièces présentes sur le tapis de saisie 6, et non saisies par le robot d'approvisionnement 16, finissent par retomber sur le tapis transversal 8 en bout du tapis de saisie 6. Les pièces recommencent alors un cycle de déplacement tapis transversal/organe d'alimentation/trémie.

De la sorte, l'installation 1 permet un meilleur agencement des pièces sur le tapis de saisie 6 ce qui facilite le repérage de leur position et de leur orientation et rend donc plus aisé leur préhension par le robot d'approvisionnement 16. En outre, la boucle 104 assurée par le tapis transversal 8, les moyens de séparation et le tapis de saisie 6 permet d'assurer que les pièces non saisies par le robot d'approvisionnement 16 ne sortent pas de l'installation 1 et puissent être saisies ultérieurement par le robot d'approvisionnement 16, la trémie 10 permettant de faire retomber les pièces sur le tapis de saisie 6 au moins selon un sens aléatoire. Bien entendu, un autre paquet de pièces peut être déplacé du tapis intermédiaire 4 au tapis transversal 8 pour alimenter la boucle 104 précitée même si toutes les pièces déjà présentes dans la boucle 104 n'ont pas toutes été saisies par le robot d'approvisionnement 16.

En référence aux figures 4a à 4c, la mise en oeuvre de l'installation 1 lorsqu'un changement de chargement a lieu va être à présente décrite. Le changement de chargement consiste ici à remplacer des boîtes A par des boîtes B contenant d'autres pièces mais cet exemple de changement n'est donné qu'à titre illustratif et la mise en oeuvre décrite s'applique également à d'autres types de changement de chargement à savoir:
- passage de pièces en vrac de type A à des pièces en vrac de type B,
- passage de pièces en vrac à des boîtes,
- passage de boîtes à des pièces en vrac.

En référence à la figure 4a, au cours d'une première étape, on inverse le sens de fonctionnement du tapis d'amenée 2 pour récupérer les boîtes A présentes sur ce tapis (passage du sens avance 101 au sens inverse 103). Il ne reste alors des boîtes A que sur le tapis intermédiaire 4, le tapis de saisie 6 et le tapis de retour 12. Pendant ce temps le reste de l'installation continue à fonctionner normalement (comme décrit précédemment) pour assurer la fin de l'approvisionnement en pièces des boîtes A du poste de travail.

En référence à la figure 4b, au cours d'une deuxième étape, l'opérateur commence à charger le tapis d'amenée 2 avec les nouvelles boîtes B.

En outre, dès que l'approvisionnement du poste de travail en pièces des boites A n'est plus nécessaire, le tapis de saisie 6 bascule dans sa position inclinée et est actionné pour modifier son sens de déplacement (du sens avance 101 au sens inverse 103) pour déplacer la boîte A sur le tapis de retour 12. Le tapis de saisie 6 revient ensuite dans sa position horizontale. Il reste alors éventuellement une boîte A pleine sur le tapis intermédiaire 4. Dans ce cas le tapis intermédiaire 4 et le tapis de saisie 6 coopèrent pour que la dernière boîte A soit déplacée sur le tapis de saisie 6. Ensuite le tapis de saisie 6 est basculé de nouveau dans sa position inclinée et est actionné pour modifier son sens de déplacement (du sens avance 101 au sens inverse 103) pour déplacer la dernière boîte A sur le tapis de retour 12. Le tapis de saisie 6 revient ensuite dans sa position horizontale.

Simultanément à l'évacuation des dernières boîtes A, le reste de l'installation 1 est préparé au changement de chargement. Par exemple, le robot d'approvisionnement 16 peut effectuer son changement d'outil. Par exemple, le dispositif de détection 15 peut opérer son changement de programme pour le repérage des nouvelles pièces présentes dans les boîtes B.

En référence à la figure 4c, une fois les dernières boîtes A évacuées sur le tapis de retour 12 et le reste des changements de l'installation 1 effectué, l'installation 1 se remet à fonctionner normalement à partir des boîtes B présentes sur le tapis d'amenée 2.

L'installation 1 permet ainsi un changement aisé et rapide de chargement. En particulier, le nouveau chargement peut commencer à être chargé dans l'installation 1 alors même que l'ancien chargement n'est pas tout à fait évacué.

Bien entendu l'invention n'est pas limitée au mode de réalisation décrit et on peut y apporter des variantes de réalisation sans sortir du cadre de l'invention tel que défini par les revendications.

En particulier, bien qu'ici l'installation comporte un tapis intermédiaire, l'installation pourra ne pas comporter de tapis intermédiaire, les boîtes ou les pièces passant alors directement du tapis d'amenée au tapis de saisie ou au tapis transversal. On préfèrera toutefois que l'installation comporte un tapis intermédiaire qui facilitera et favorisera le déplacement des pièces dans l'installation. Le tapis intermédiaire créera en effet une zone tampon permettant notamment de continuer plus longtemps à poursuivre la production pendant que le changement de chargement s'opère au niveau du tapis d'amenée.

En outre, bien qu'ici l'installation comporte un tapis de retour, l'installation pourra ne pas comporter un tel tapis, les boîtes ou les pièces non utilisées tombant par exemple directement dans un récipient agencé en extrémité du tapis de saisie opposée à celle en regard du tapis intermédiaire ou du tapis d'amenée.

Bien qu'ici le tapis d'amenée puisse fonctionner dans les deux sens de marche, le tapis d'amenée pourra ne fonctionner que dans le sens d'avance. On préférera toutefois que le tapis d'amenée travaille dans les deux sens de marche afin d'accélérer le changement de chargement notamment en rappelant les pièces ou boîtes encore présentes sur le tapis d'amenée.

## Revendications

1. Installation d'approvisionnement en pièces d'un poste de travail, l'installation comportant :
- un tapis d'amenée (2) des pièces en vrac ou de boîtes contenant les pièces,
- des moyens d'entraînement (3) du tapis d'amenée aptes à entraîner le tapis d'amenée dans un sens d'avance selon un mouvement saccadé,
- un tapis de saisie (4), le tapis de saisie étant agencé de sorte à être mobile entre une position horizontale de travail et une position inclinée d'évacuation des pièces ou des boîtes hors de l'installation et du poste de travail,
- un tapis transversal (8) agencé entre le tapis d'amenée et le tapis de saisie, l'installation étant agencée de façon que le tapis transversal transporte uniquement les pièces en vrac tout en autorisant le passage des boîtes entre le tapis d'amenée et le tapis de saisie,
- des moyens de séparation des pièces en vrac en provenance du tapis transversal pour alimenter le tapis de saisie en pièces séparées, lesdits moyens de séparation comprenant une trémie (10) débouchant au-dessus du tapis de saisie et un organe d'alimentation (11) s'étendant entre le tapis transversal et la trémie,
- un dispositif de détection (15) de la position et/ou de l'orientation des pièces sur le tapis de saisie ou dans la boîte présente sur le tapis de saisie, le dispositif de détection étant relié à une unité de commande,
- un robot d'approvisionnement (16) du poste de travail commandé par l'unité de commande à partir d'informations transmises par le dispositif de détection afin d'évacuer les pièces du tapis de saisie à destination du poste de travail.

2. Installation selon la revendication 1, dans laquelle le tapis d'amenée (2) et les moyens d'entraînement (3) du tapis d'amenée (2) sont configurés de sorte à pouvoir entraîner le tapis d'amenée (2) dans les deux sens de marche.

3. Installation selon la revendication 1 ou la revendication 2, comportant un tapis intermédiaire (4) qui est agencé à entre le tapis d'amenée (2) et le tapis de saisie (6) dans le prolongement du tapis d'amenée et du tapis de saisie, le tapis transversal (8) étant alors agencé entre le tapis intermédiaire et le tapis de saisie.

4. Installation selon la revendication 3, comportant des moyens d'entraînement (5) du tapis intermédiaire (4), le tapis intermédiaire et les moyens d'entraînement du tapis intermédiaire étant configurés de sorte à être aptes à entraîner le tapis intermédiaire à une vitesse supérieure à la vitesse à laquelle est entraîné le tapis d'amenée (2).

5. Installation selon l'une des revendications précédentes, comportant des moyens d'entraînement (7) du tapis de saisie (6), le tapis de saisie et les moyens d'entraînement du tapis de saisie étant configurés de sorte à pouvoir entraîner le tapis de saisie dans les deux sens de marche.

6. Installation selon l'une des revendications précédentes, dans laquelle l'organe d'alimentation (11) comporte un tapis incliné agencé pour remonter les pièces du tapis transversal (8) à la trémie (10).

7. Installation selon la revendication 6, dans laquelle le tapis incliné est cranté.

8. Installation selon l'une des revendications précédentes, dans laquelle l'organe d'alimentation (11) est configuré pour remonter une par une les pièces du tapis transversal (8) à la trémie (10).

9. Installation selon l'une des revendications précédentes, comportant en outre un tapis de retour (12) agencé de sorte à s'étendre parallèlement au tapis d'amenée (2) et au tapis de saisie (6) et sous le tapis d'amenée, le tapis de saisie et le tapis transversal (8).

10. Installation selon la revendication 9, dans laquelle le tapis de retour (12) s'étend de sorte à avoir une première extrémité (13a) débouchant au niveau d'une extrémité d'entrée du tapis d'amenée (2) et une deuxième extrémité (13b) débouchant au niveau d'une des extrémités du tapis de saisie (6).

11. Installation selon la revendication 9 ou la revendication 10, dans laquelle le tapis de retour (12) s'étend de sorte qu'une de ses extrémités (13b) soit agencée au niveau de l'extrémité du tapis de saisie (6) qui est à l'aplomb du tapis transversal (8).

12. Installation selon l'une des revendications précédentes, dans laquelle le dispositif de détection (15) comporte des moyens de détection optique et des moyens d'éclairage associés aux moyens de détection optique pour éclairer le tapis de saisie (6) et améliorer la qualité des informations acquises par les moyens de détection optique.
